# EUROPEAN PATENT APPLICATION

(11) **EP 3 418 184 A1**
(43) Date of publication of application: **26.12.2018**
(21) Application number: 17176991.2
(22) Date of filing: 20.06.2017
(51) Int. Cl.: B64C 9/16, B60F 5/02

(54) **WING FLAP SYSTEM FOR FLYING CAR**

(71) Applicant: AeroMobil R&D, s. r. o., 82106 Bratislava-mestska cast Podunajske Biskupice (SK)
(72) Inventor: MACANDREW, Kenneth Douglas Alexander, 841 06 Bratislava-Zahorska Bystrica (SK); URIK, Tomas, 908 41 Sastin-Straze (SK); ROOMS, William Simon, 841 02 Bratislava (SK)
(74) Representative: Finnegan Europe LLP

(57) **Abstract**

A wing and flap system for an aircraft comprising: a wing (16); and a deployable flap (30) connected to the wing, the flap being moveable between a first position in which a trailing edge portion of the wing substantially overlaps the flap and the angle of incidence of the flap is substantially the same as the angle of incidence of the wing, and a second position in which the trailing edge (33) of the flap is behind the trailing edge (34) of the wing and the angle of incidence of the flap is greater than that of the wing, and an intermediate position between the first and second positions, in which the trailing edge of the flap is behind the trailing edge of the wing and the angle of incidence of the flap is substantially the same as that of the wing; and further comprising a flap operating mechanism for moving the flap between the first, second, and intermediate positions, comprising: a driven toothed pinion (52) mounted in the wing; and first (36) and second (38) struts, each substantially aligned with a plane including a chord of the wing and extending between the pinion and the flap, each strut having a toothed rack (40, 42) engaged with the toothed pinion such that operation of the pinion moves each strut in a direction substantially aligned with a plane including a chord of the wing, the first strut being connected to the flap relatively closer to the leading edge thereof, and the second strut being connected to the flap relatively closer to the trailing edge thereof. The system can be used in a flying car having foldable wings.

## Description

This invention relates to a flap system for use on an aircraft. In particular, it relates to such a system for use on a convertible vehicle that is configurable for both road and flight use, sometimes called a "flying car".

Flaps, such as deployable trailing edge flaps, are structures used to adjust the aerodynamic properties of a wing, typically to change its lift characteristics. By extending trailing edge flaps, the wing can be adapted to operate more effectively in low speed situations, such as takeoff and landing, typically to decrease the stall speed of the wing. When the aircraft is properly airborne and flying, the flaps can be retracted to increase the efficiency of the wing and reduce drag.

There are various types of trailing edge flap systems. One type, known as a Fowler flap system, involves a two-stage movement of the flap as it is extended. In a first stage, the flap extends mainly laterally from the trailing edge of the wing with little or no change of angle of attack with respect to the wing itself. The effect of this is to extend the chord length (distance from the leading edge of the wing to the trailing edge of the flap in the direction of travel) of the whole wing and flap structure. In a second stage, the angle of attack of the flap with respect to the wing is increased, leading to an overall increase in the angle of attack of the wing and flap structure.

There have been a number of previous proposals for flying car designs, i.e. vehicles that can be fully compliant with legal and practical requirements for both road and flight use. Examples include the Terrafugia Transition (WO 2007/114877) and the AeroMobil (WO 2013/032409, WO 2016/057003, WO 2016/057004).

The space available within the wings of these vehicles for actuators and operating mechanisms is limited. In addition, it is usually necessary that operational controls between the body and the wing structure be capable of being disconnected for wing folding to take place.

The invention aims to provide a wing and flap system that addresses at least some of these considerations.

A first aspect provides a wing and flap system for an aircraft, comprising: a wing; and a deployable flap connected to the wing, the flap being moveable between a first position in which a trailing edge portion of the wing substantially overlaps the flap and the angle of incidence of the flap is substantially the same as the angle of incidence of the wing, and a second position in which the trailing edge of the flap is behind the trailing edge of the wing and the angle of incidence of the flap is greater than that of the wing, and an intermediate position between the first and second positions, in which the trailing edge of the flap is behind the trailing edge of the wing and the angle of incidence of the flap is substantially the same as that of the wing; and further comprising a flap operating mechanism for moving the flap between the first, second, and intermediate positions, comprising: a driven toothed pinion mounted in the wing; and first and second struts, each substantially aligned with a plane including a chord of the wing and extending between the pinion and the flap, each strut having a toothed rack engaged with the toothed pinion such that operation of the pinion moves each strut in a direction substantially aligned with a plane including a chord of the wing, the first strut being connected to the flap relatively closer to the leading edge thereof, and the second strut being connected to the flap relatively closer to the trailing edge thereof.

For example, the first position can have an angle of attack that is in the range 0 - 10 degrees with respect to the angle of attack of the wing and the second position can have an angle of attack that is greater than 10 degrees with respect to the angle of attack of the wing, optionally up to at least 35 degrees with respect to the angle of attack of the wing.

The driven toothed pinion can be mounted for rotation about an axis substantially aligned with the span of the wing.

Each rack can be a curved or arcuate rack such that operation of the pinion moves the connection to the flap in both dimensions of the respective plane that includes a chord of the wing. In this way the drive input from the pinion can be from a fixed position. The first and second struts can have different curved or arcuate racks. In this way a single drive input can vary both the lateral displacement of the flap from the wing and the angle of attack of the flap. The rack on the first strut can have an equidistant distribution of teeth, and the rack on the second strut can have a non-equidistant distribution of teeth. In this way the velocities of the connections of the struts to the flap can be made to vary.

Each strut can further comprise guide members that engage in guide tracks connected to the wing to constrain the movement of the rack when the pinion is operated. Each strut can have at least two guide members, each guide member engaging in a respective guide track, and each respective guide track defining a different path of movement for its respective guide member.

The system can comprise at least two operating mechanisms spaced along the span of the wing, the pinion of each mechanism being defined on a common shaft. Providing drive to the pinion of each operating mechanism can help avoid jamming due to distortion of components.

The pinion can be provided with a separable connection to be connectable to a motor located in a body of an aircraft to which the wing and flap system is connected.

Another aspect provides an aircraft comprising a convertible vehicle having a flight configuration and a road use configuration, the aircraft comprising a body; wheels for supporting, driving and steering the aircraft in a road use configuration; and a pair of wings connected to the body by a mounting structure, the wings being movable between an extended position in which the wings extend laterally from the body for a flight configuration, and a folded position in which the wings extend along the body from the mounting structure for a road use configuration; wherein the wings comprise the wing and flap system.

At least one motor can be located in the body that is controllable to move the flaps between the first, second, and intermediate positions when in the flight configuration.

The wing and flap system can be configured such that movement from the extended position to the folded position only takes place when the flaps are in the first position. This can help avoid damage to the flaps when the trailing edges of the wings are positioned close to other structures when in the folded position.

Further variations can be made within the scope of the invention.
Figure 1 shows a front perspective view of a flying car in a flight configuration;
Figure 2 shows a front perspective view of a flying car in a road use configuration;
Figure 3 shows a schematic view through the trailing edge regions of a wing of the flying car of Figures 1 and 2;
Figure 4 shows a partial view of an operating mechanism;
Figure 5 shows another view of an operating mechanism;
Figures 6A - F show the relative positions of various parts as a flap moves from a first to a second position; and
Figure 7 shows a flap system with two operating mechanisms.

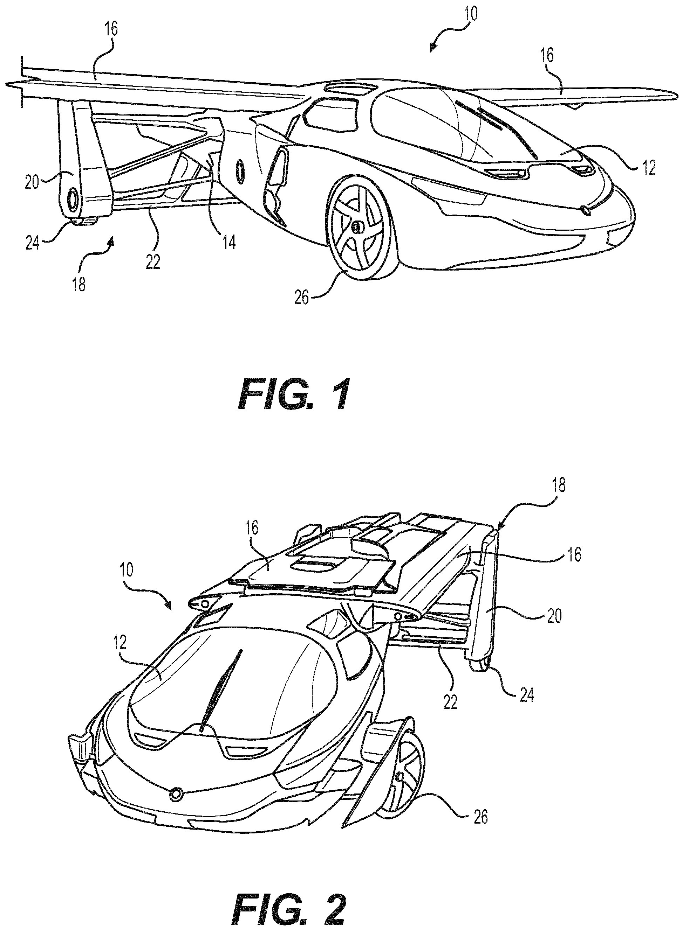

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 are connected to a mounting structure (not shown) positioned within the body 10 beneath a moveable cover 17. The wings 16 can be moved between an extended position for flight use (Figure 1), and a folded position for road use (Figure 2). In the folded position, the wings lie along the top of the body 10, the long axes of the wings lying substantially parallel to the long axis of the body 10.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use.

When the wings 16 are folded back to lie along the rear of the body 14, the trailing edge part of one wing lies over the corresponding trailing edge part of the other wing. When folded in this way, the overall width of the folded wings lies within the lateral extremities of the vehicle as defined, for example, by the wheels when extended in the road use configuration. Furthermore, the width of the folded arrangement is such that the wings fit between the upper parts of the tail vertical control surfaces 20, and the wing tips are adjacent the tail horizontal control surfaces 22.

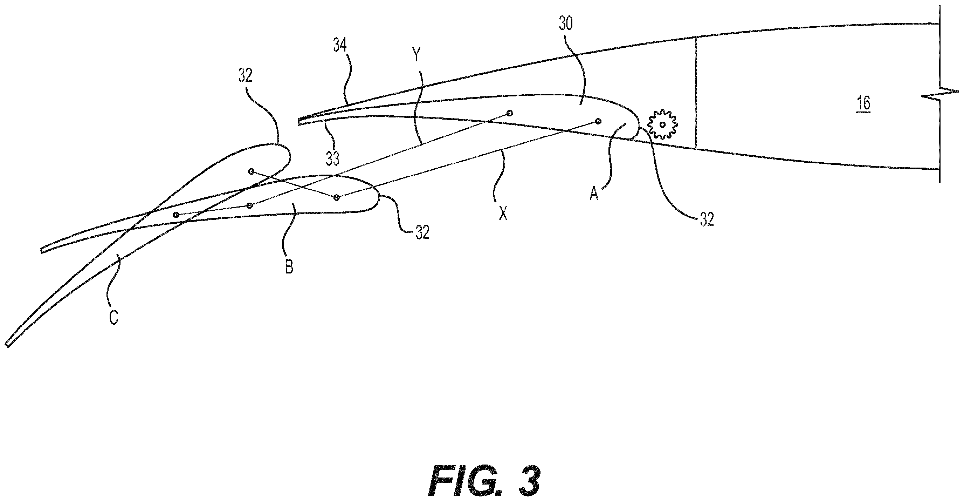

Figure 3 shows a schematic section through the trailing edge region of the wing of the vehicle shown in Figures 1 and 2 showing the relative positions of the wing 16 and a trailing edge flap 30.

The flap 30 is mounted on the underside of the trailing edge region of the wing 16. The flap 30 is moveable between a first position A and a second position C via a range of intermediate positions B. in the first position A the flap 30 is substantially aligned with the wing 16, the trailing edge 33 of the flap 30 lying under the trailing edge 34 of the wing 16. In the intermediate positions B, the flap 30 is displaced rearwardly from the wing 16. The plane of the flap 30 is lowered with respect to that of the wing 16, and the angle of attack of the flap is substantially similar to that of the wing. In the second position C, the flap 30 is further displaced behind and below the wing and has an angle of attack greater than that of the wing.

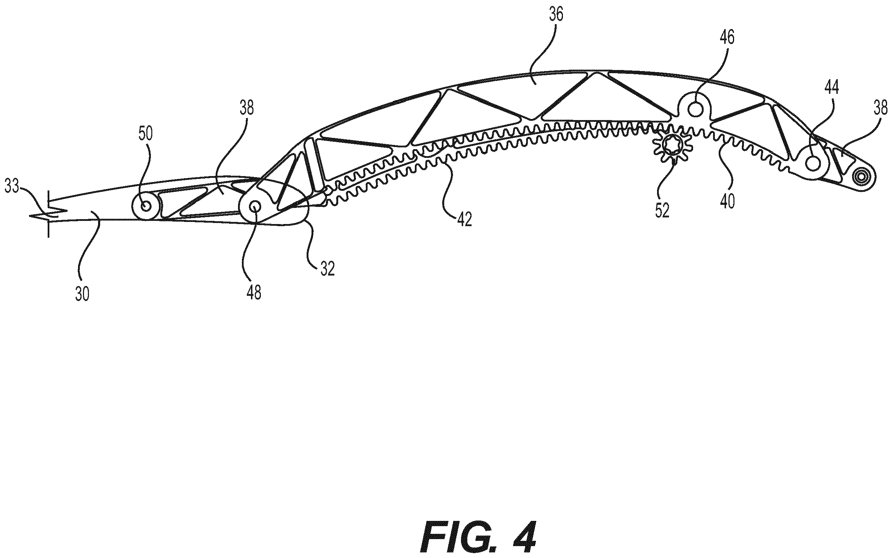

Figure 4 shows a partial view of the operating mechanism used to move the flap 30 between positions A, B, and C (parts are omitted for clarity).

The operating mechanism comprises first and second struts 36, 38, extending between the wing 16 and the flap 30. Each strut 36, 38 has a curved or arcuate shape and is provided with a toothed rack 40, 42 on its concave surface. The distribution of teeth on the first rack is substantially equidistant. The distribution of teeth on the second rack is non-equidistant. First and second guide members 44, 46 project from the side of the forward part of the first strut 36 for engagement in guide tracks (not shown) as is described below. Corresponding guide members are also provided on the second strut 38.

The first strut 36 is connected near the leading edge 32 of the flap 30 by means of a pivot connection 48. The second strut 38 is connected to the flap 30 by a corresponding pivot connection 50 at a portion closer to the trailing edge 33 of the flap 30 than the first connection 48.

A toothed pinion 52 is mounted in the wing 16 for rotation about an axis extending in the span direction of the wing. The pinion 52 engages the toothed racks 40, 42. Rotation of the pinion 52 acts on the toothed racks 40, 42 and causes the struts 36, 38 to extend or retract together, moving the flap accordingly.

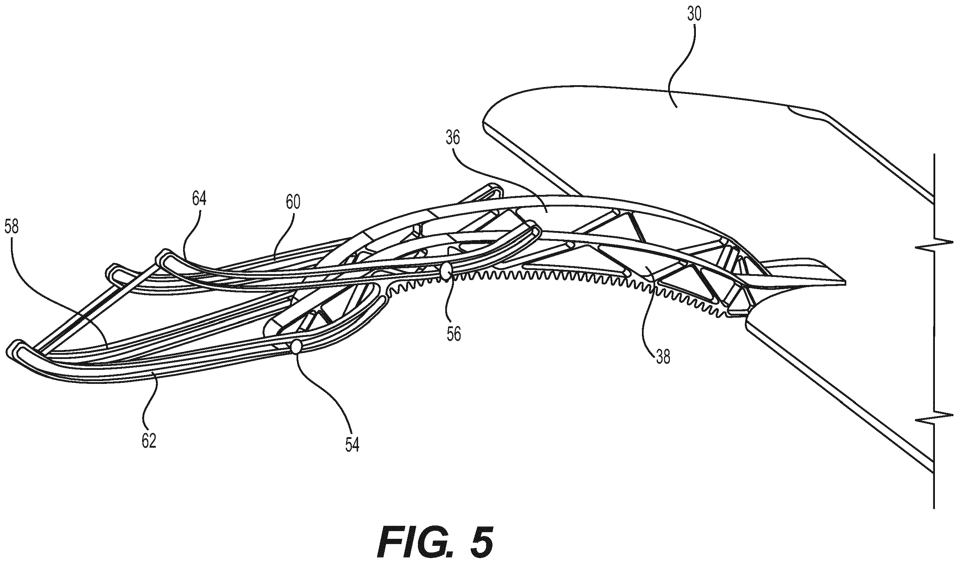

Figure 5 shows the operating mechanism from the opposite side to that shown in Figure 4.

The second strut 38 has first and second guide members 54, 56 corresponding to the first strut guide members 44, 46 shown in Figure 4. Each guide member 44, 46, 54, 56 engages in corresponding guide rails 58, 60, 62, 64 which define tracks constraining the range of movement of each guide member 44, 46, 54, 56 to a respective predetermined path. The shape of each pair of guide rails 58, 60, and 62, 64 is configured to provide predetermined ranges of movement of the flap connections 48, 50 in both dimensions of a vertical plane containing a chord of the wing as the struts 36, 38 extend or retract on operation of the pinion. The guide rails 58, 60, 52, 54 are fixed to the wing structure (not shown).

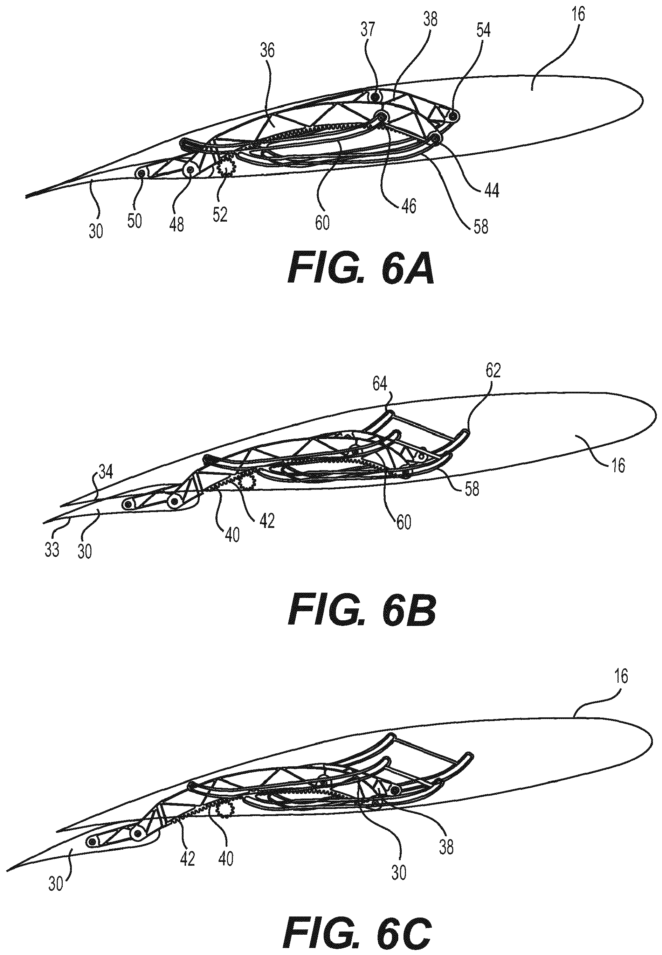

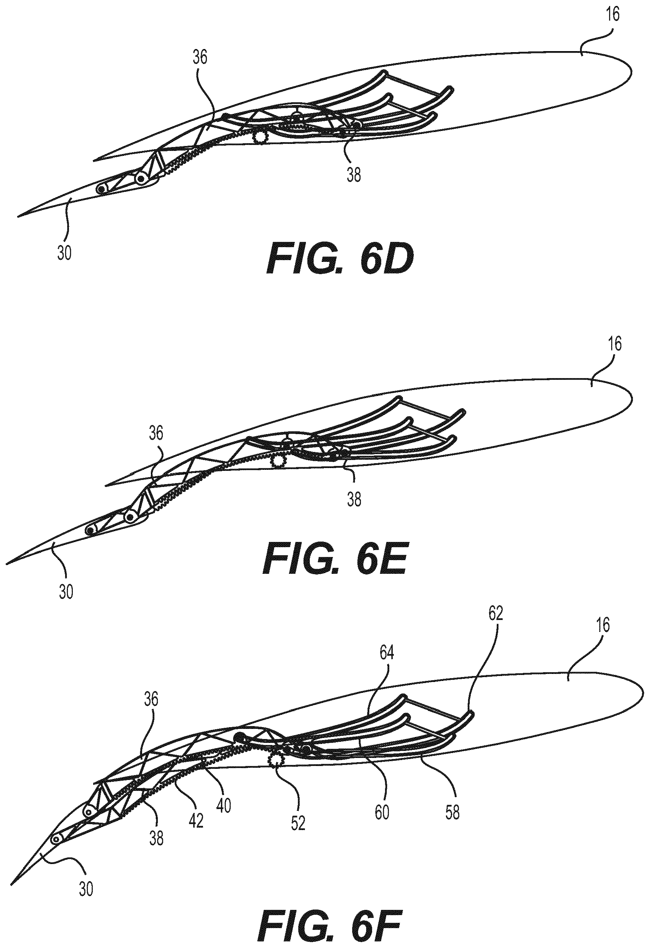

Figures 6A-F show the relative positions of the flap 30 and wing 16 as the operating mechanism moves the flap 30 between the first position (Figure 6 A), intermediate positions (Figures 6B-E), and second position (Figure 6 F).

Each of Figures 6A-F shows the relative positions of the flap 30, first and second struts 36, 38, the first and second flap connections 48, 50, and the positions of the guide members 44, 46, 54, 56 in their respective guide rails 58, 60, 62, 64. The wing 16 is shown in outline for reference.

Figure 6A shows the flap 30 in the first position (position A of Figure 3). The struts 36, 38 are in their most retracted position with the pinion at the rear end of the racks 40, 42. The guide members 44, 46, 54, 56 lie at the front ends of respective guide rails 58, 60, 62, 64. Driving the pinion 52 in an anti-clockwise direction causes the struts to begin to extend and displace the flap 16.

Figure 6B shows the flap 30 in an early stage of deployment in an intermediate position (position B of Figure 3). The shapes of the racks 40, 42, and of the guide rails 58, 60, 62, 64 mean that the flap 30 drops below the lower surface of the wing 16, and the trailing edge 33 of the flap 30 extends behind the trailing edge 34 of the wing 16. In this position, the angle of attack of the flap 30 is about 2 degrees greater than that of the wing 16.

Further operation of the mechanism continues to extend the struts 36, 38 and the flap moves laterally with a relatively small progressive increase in the angle of attack (Figure 6C: five degrees; Figure 6 D: eight degrees; Figure 6 E: 10 degrees) as the flap 30 moves through the range of intermediate positions. The main effect during this stage of operation is to increase the chord length of the wing and flap combination, with a relatively small change of angle of attack of the wing and flap combination.

In the final stage of movement, the racks 40, 42, and guide rails 58, 60, 62, 64 cause the first strut 36 to move more than the second strut 38, causing the angle of attack to increase to about 35 degrees (Figure 6 F). At this point the struts 36, 38 are fully extended, the pinion being at the front end of each rack 40, 42. The main effect during this change of operation is to increase the angle of attack of the wing and flap combination.

Reversing the drive of the pinion 52 reverses the sequence of movements and retracts the flap 30 into the wing 16.

Lines X and Y on Figure 3 show the trajectories of the first and second flap connections 48, 50 as the struts 36, 38 extend.. In the initial phase of deployment (Figures 6A - E), the trajectories are approximately linear and converge slightly, hence the lateral deployment with only a small change in the angle of attack. In the final phase of deployment (Figure 6 F), the trajectories diverge relatively raising the first connection 48 and lowering the second connection 50, thus effecting the main change in the angle of attack of the flap 30.

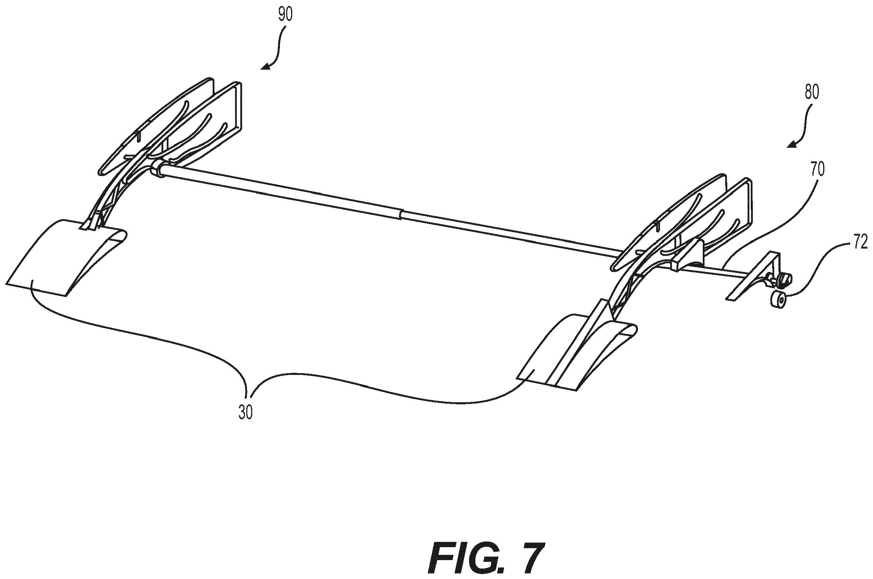

Figure 7 shows the flap system with two operating mechanisms 80, 90. Each mechanism is substantially as described in relation to Figures 4 - 6. Only the part of the flap 30 connected to each mechanism 80, 90 is shown.

The pinion of each mechanism 80, 90, is mounted on a common shaft 70 which is provided with a releasable connection 72 by which the shaft 70 can be connected to a drive motor located in the aircraft body (not shown). By locating the connection 72 near the wing root, the drive can be connected or disconnected to allow wing folding. By providing an appropriate indexing system in the connection, the system can be configured such that the connection 72 can only be made or broken when the flap is in the first position. This can help avoid damage to the flap during wing folding. A universal joint or constant velocity joint can be provided in the shaft drive system to accommodate alignment issues when connecting the systems.

By providing two substantially identical systems and a common drive shaft, the possibility of jamming due to distortion can be reduced.

Various changes can be made to the system disclosed above and in the claims. For example, where two mechanisms are provided, one of the mechanisms can be passive, with no drive to the pinion, and the mechanism merely acts to control the movement of the flap under the influence of the active mechanism. The exact shapes of the guide rails, struts, and racks can be selected to achieve the desired range of movements. Other changes are also possible.

## Claims

1. A wing and flap system for an aircraft, comprising:
a wing; and
a deployable flap connected to the wing, the flap being moveable between
a first position in which a trailing edge portion of the wing substantially overlaps the flap and the angle of incidence of the flap is substantially the same as the angle of incidence of the wing, and
a second position in which the trailing edge of the flap is behind the trailing edge of the wing and the angle of incidence of the flap is greater than that of the wing, and
an intermediate position between the first and second positions, in which the trailing edge of the flap is behind the trailing edge of the wing and the angle of incidence of the flap is substantially the same as that of the wing;
and further comprising a flap operating mechanism for moving the flap between the first, second, and intermediate positions, comprising:
a driven toothed pinion mounted in the wing; and
first and second struts, each substantially aligned with a plane including a chord of the wing and extending between the pinion and the flap, each strut having a toothed rack engaged with the toothed pinion such that operation of the pinion moves each strut in a direction substantially aligned with a plane including a chord of the wing, the first strut being connected to the flap relatively closer to the leading edge thereof, and the second strut being connected to the flap relatively closer to the trailing edge thereof.

2. A system as claimed in claim 1, wherein the driven toothed pinion is mounted for rotation about an axis substantially aligned with the span of the wing.

3. A system as claimed in claim 1 or 2, wherein each rack is a curved or arcuate rack such that operation of the pinion moves the connection to the flap in both dimensions of the respective plane that includes a chord of the wing.

4. A system as claimed in claim 3, wherein the first and second struts have different curved or arcuate racks.

5. A system as claimed in claim 4, wherein the rack on the first strut has an equidistant distribution of teeth, and the rack on the second strut has a non-equidistant distribution of teeth.

6. A system as claimed in any preceding claim, wherein each strut further comprises guide members that engage in guide tracks connected to the wing to constrain the movement of the rack when the pinion is operated.

7. A system as claimed in claim 5, wherein each strut has at least two guide members, each guide member engaging in a respective guide track, and each respective guide track defining a different path of movement for its respective guide member.

8. A system as claimed in any preceding claim, comprising at least two operating mechanisms spaced along the span of the wing, the pinion of each mechanism being defined on a common shaft.

9. A system as claimed in any preceding claim, wherein the pinion is provided with a separable connection to be connectable to a motor located in a body of an aircraft to which the wing and flap system is connected.

10. A system as claimed in any preceding claim, wherein the first position has an angle of attack that is in the range 0 - 10 degrees with respect to the angle of attack of the wing and the second position has an angle of attack that is greater than 10 degrees with respect to the angle of attack of the wing, optionally up to at least 35 degrees with respect to the angle of attack of the wing.

11. An aircraft comprising a convertible vehicle having a flight configuration and a road use configuration, the aircraft comprising a body; wheels for supporting, driving and steering the aircraft in a road use configuration; and a pair of wings connected to the body by a mounting structure, the wings being movable between an extended position in which the wings extend laterally from the body for a flight configuration, and a folded position in which the wings extend along the body from the mounting structure for a road use configuration; wherein the wings comprise a wing and flap system as claimed in any preceding claim.

12. An aircraft as claimed in claim 11, further comprising at least one motor located in the body that is controllable to move the flaps between the first, second, and intermediate positions when in the flight configuration.

13. An aircraft as claimed in claim 12, wherein the wing and flap system is configured such that movement from the extended position to the folded position only takes place when the flaps are in the first position.
